Europäisches Patentamt

European Patent Office

Office européen des brevets

(11) Veröffentlichungsnummer: **0 465 774 A2**

# EUROPÄISCHE PATENTANMELDUNG

(21) Anmeldenummer: **91106294.1**

(22) Anmeldetag: **19.04.91**

(51) Int. Cl.5: **B29C 47/40**

(30) Priorität: **07.07.90 DE 4021752**

(43) Veröffentlichungstag der Anmeldung:
**15.01.92 Patentblatt 92/03**

(84) Benannte Vertragsstaaten:
**BE DE FR GB IT**

(71) Anmelder: **HERMANN BERSTORFF Maschinenbau GmbH**
**An der Breiten Wiese 3/5**
**W-3000 Hannover 61(DE)**

(72) Erfinder: **Voigt, Jürgen, Dipl.-Ing.**
**Habichtstrasse 11**
**W-3101 Wathlingen(DE)**

(54) **Zweischneckenextruder.**

(57) Es wird ein Zweischneckenextruder vorgestellt, bei dem die Extruderschnecken über ein gemeinsames, brillenförmiges Stützjoch kraft- und/oder formschlüssig miteinander verbunden sind. Dieses Stützjoch dient zur Aufnahme der an den Schnecken wirkenden Biegekräfte und ermöglicht zudem eine bessere Zentrierung der Schneckenlängsachsen untereinander und in Bezug auf die zylindrischen Bohrungen des Extrudergehäuses.

Fig. 2

Die Erfindung betrifft einen Zweischneckenextruder zur Verarbeitung von thermoplastischen Kunststoffen oder Elastomeren, bestehend aus einem Extrudergehäuse mit zwei einander überschneidenden zylindrischen Gehäusebohrungen, einem Antrieb und zwei unterbrochene Schneckenstege aufweisenden Extruderschnecken, die antriebsseitig um ihre Längsachse im Extrudergehäuse drehbar gelagert sind.

Da die Schnecken eines solchen Extruders nicht beliebig biegesteif hergestellt werden können, stellt sich jedenfalls bei vergleichsweise langen Extruderschnecken aufgrund ihres Eigengewichtes und der vom Kunststoff auf die Schnecken wirkenden Kräfte eine mit zunehmender Schneckenlänge anwachsende Abweichung der Schneckenlängsachse von der Längsachse der Gehäusebohrung ein. Aufgrund des nur sehr geringen Spieles zwischen den Schneckenstegen und der Gehäuseinnenwand kommt es schließlich zu einem Aufliegen der Schneckenstege, was gerade beim Anfahren des Extruders zu erheblichem Stegbelastungen führt. Außerdem werden bei einem solchen Anfahrvorgang zusätzlich Radialkräfte in die Schneckenschäfte eingebracht die das Getriebeaggregat unnötig belastet.

Diese Problematik aufgreifend, wurde in der DE-OS 34 08 935 vorgeschlagen, bei einem Einschneckenextruder mindestens im vorderen Extruderschneckenbereich ein zusätzliches, lagerartiges Stützelement für die Schnecke im Schneckengehäuse vorzusehen. Dieses Stützelement kann als Lagerschale, Ringsegment oder in Form von mehreren Lagerzapfen ausgebildet sein und verfügt über ein schnell austauschbares Verschleißteil. Das Stützelement ist nach dieser Druckschrift zur Abstützung der Schneckenstege, der Schneckenspitze oder des Schneckenkernes geeignet. Bei einer Abstützung der Schnecke am Schneckenkern ist dort zudem eine Unterbrechung der Schneckenstege notwendig.

Eine weitgehend gleiche Lösung der technischen Aufgabe wurde in der DE-OS 35 34 097 offenbart. Auch hier wird der Schneckenkern über mit Verschleißflächen versehenen Lagerstiften vor einem Aufliegen der Schneckenstege auf der Gehäuseinnenwand bewahrt.

Nachteilig bei diesen Lösungsvorschlägen ist, daß das Extrudergehäuse zur Aufnahme der Stützelemente durchbohrt werden muß und damit neben dem erhöhten Fertigungsaufwand in der Regel auch Dichtungsprobleme einhergehen. Außerdem müssen diese Stützelemente vor dem Ziehen der Extruderschnecke entfernt werden und nach dem Einführen der Schnecke in das Extrudergehäuse erst wieder genau justiert werden. Ein weiterer Nachteil besteht zudem darin, daß die Verschleißflächen der Stützelemente vergleichsweise klein sind und daher relativ häufig erneuert werden müssen, was den Wartungsaufwand des Extruders weiter vergrößert.

Unvorteilhaft ist außerdem, daß sich derartige Stützelemente nicht bei Zweischneckenextrudern einsetzen lassen, denn bei solchen Extrudern ist die Positionierung von Stützelementen im Zwickelbereich nicht möglich. Hinzu kommt, daß jedenfalls lange Schnecken eines Zweischneckenextruders gerade in dem Bereich, in dem die Schneckenstege miteinander kämmen, aufgrund individueller, unterschiedlicher Schneckendurchbiegungen bei bestimmten Extruderlängen einer zentrierenden Stützvorrichtung bedürfen.

Demnach besteht die Aufgabe der Erfindung darin, unter Vermeidung der genannten Nachteile, einen Zweischneckenextruder mit einem Stützelement vorzustellen, bei dem auch bei großen Schneckenlängen eine achsparallele Führung der Extruderschnecken untereinander und gegenüber den Längsachsen der Gehäusebohrungen sichergestellt ist.

Zur Lösung dieser Aufgabe wird ein Extruder der eingangs genannten Art vorgeschlagen, bei dem im Extrudergehäuse ein für beide Extruderschnecken gemeinsames, brillenförmiges Stützjoch vorgesehen ist, das die Schäfte der Extruderschnecken form- und/oder kraftschlüssig miteinander verbindet und dessen Streben sich an der Gehäuseinnenwand abstützen.

In einer vorteilhaften Ausgestaltung der Erfindung gehen je Gehäusebohrung zwei Streben von dem Stützjoch ab, die vorzugsweise einen Winkel vom 40 - 85° zueinander bilden. Zudem ist vorgesehen, daß das Stützjoch zur optimalen Zentrierung der Extruderschnecken spielfrei auf die Schneckenschäfte und in das Extrudergehäuse auf- bzw. einziehbar ist. Zu besserer Montage bzw. Demontage wird eine Zweiteilung des Stützjochs vorgeschlagen, wobei die Trennungslinie durch eine Gerade zwischen den Drehachsen der Extruderschnecken gebildet wird. Unabhängig davon kann das Joch auch wie übliche Schneckenteile auf die Schneckenschäfte gezogen werden. Die Montage der so ausgerüsteten Schnecken in das Extrudergehäuse hinein, wird durch die exakte Position der beiden Schnecken untereinander erleichtert und erfordert keinen Mehraufwand.

Um den Strömungswiderstand durch das Stützjoch zu minimieren, ist der Durchmesser D des Stützjochs kleiner zu wählen als der Durchmesser d der Extruderschnecken.

In diesem Zusammenhang ist es auch vorteilhaft, die Durchmesser der auf Schneckenschäften sitzenden Schneckenhülsen im Bereich des Stützjochs zu verringern, um so den Durchmesser D des Stützjochs möglichst klein und den freien Extruderinnenraum möglichst groß zu halten. Nicht ausgeschlossen wird durch diese Ausgestaltung der Erfindung allerdings, daß das Stützjoch von seinen Abmessungen her gleichzeitig als Druckblende ausgelegt und eingesetzt wird.

Außerdem kann vorgesehen werden, daß zwischen den Schneckenschäften und dem Stützjoch jeweils ein Verschleißring vorgesehen ist, der mit dem Stützjoch auswechselbar verbunden ist.

Letztlich betrifft die Erfindung eine Ausführungsvariante des Stützjochs, in der dieses über keine Stützstreben verfügt, sondern lediglich zur Zentrierung der Schneckenachsen untereinander dient.

Die Erfindung läßt sich besonders gut mit Hilfe der Zeichnung und anhand von Ausführungsbeispielen erläutern.

Es zeigen:

Fig. 1    einen Blick in ein längsseitig aufgeschnittenes Gehäuse eines Zweischneckenextruders.

Fig. 2    einen Schnitt AA durch das Extrudergehäuse gemäß Fig. 1.

Fig. 3    einen Schnitt, wie in Fig. 2, jedoch mit einem Stützjoch ohne Stützstreben.

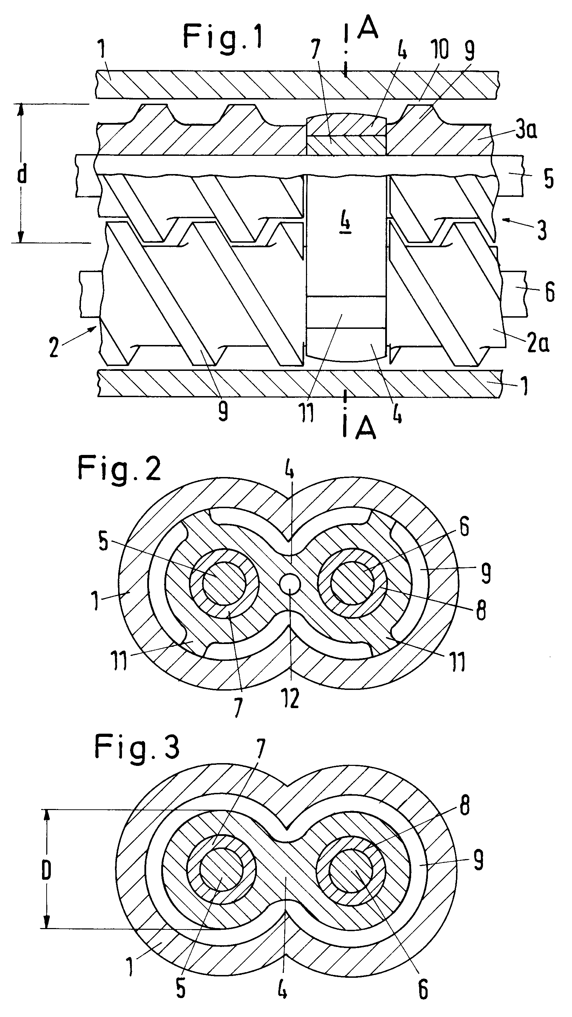

In dem in Fig. 1 dargestellten Extrudergehäuse 1 sind zwei Extruderschnecken 2, 3 in Gehäusebohrungen antriebsseitig um ihre Längsachsen drehbar gelagert. Die Extruderschnecken 2, 3 sind aus Schneckenschäften 5, 6 und darauf aufgezogenen und mit diesen verspannten Schneckenhülsen 2a, 3a aufgebaut.

Um eine zu starke Durchbiegung der Schnecken 2, 3 zu verhindern, ist an vorgewählter Stelle auf den Schnecken ein Stützjoch 4 vorgesehen, das die Schnecken untereinander und in Bezug auf die Gehäusebohrungen zentriert.

Jedes Stützjoch 4 besteht aus einem brillenförmigen Gebilde, das die Extruderschnecken 2, 3 an ihren Schneckenschäften 5, 6 oder Schneckenhülsen 2a, 3a kraftschlüssig und formschlüssig umfaßt.

Zur Aufnahme des Stützjochs 4 sind die Schneckenhülsen 2a, 3a im Abstützbereich unterbrochen und auf die Schneckenschäfte 5, 6 sind auswechselbare Verschleißringe 7, 8 aufgeschoben. Durch diese Maßnahmen läßt sich eine nur geringe Einbauweite des Stützjochs realisieren, wodurch der durch dieses Bauteil verursachte Strömungswiderstand minimierbar ist. Wenn das Stützjoch 4 nicht zusätzlich als ein den Druck des Extrudates anhebendes Bauteil ausgelegt und eingesetzt wird, sollte der Durchmesser D des Stützjochs 4 jedoch deutlich kleiner gewählt werden als der Durchmesser d der Extruderschnecken 2, 3 (siehe Figuren 1 und 3).

Die Verschleißringe 7, 8 lassen sich in einer Ausführungsvariante auch auf den im Abstützbereich in ihrem Durchmesser reduzierten Schnek-kenhülsen 2a, 3a lagern.

Zudem kann vorgesehen werden, daß das Stützjoch 4 in dem die beiden Extruderschnecken 2, 3 verbindenden Bereich mit einer oder mehreren Bohrungen 12 versehen ist, die verhindern, daß im Zwickelbereich ein Extrudatstau verursacht wird (Figur 2). Das Stützjoch 4 verfügt desweiteren über Streben 11, die die Schnecken 2, 3 gegenüber der Innenwand des Extrudergehäuses 1 abstützen.

Durch die Verwendung von die Schneckenschäfte 5, 6 umschließenden Verschleißringen 7, 8 lassen sich alle Abweichungen der Schneckenorientierungen problemlos aufnehmen und über das Stützjoch an das Extrudergehäuse 1 weiterleiten. Ein Stützjoch 4 mit vergleichsweise großer Bauteiltiefe bietet somit große Verschleißflächen an, die die Flächenbelastung der Verschleißringe reduzieren und damit die Standzeit erhöhen. Zudem läßt sich das Stützjoch mit seinen Verschleißringen problemlos gegen die Schmelze im Extruder abkapseln, so daß auch stark abrasive Stoffe vom Extruder ohne Gefahr für das Stützjoch verarbeitet werden können.

In Figur 3 ist eine Variante des Stützjochs dargestellt, bei dem völlig auf Stützstreben verzichtet wurde. In dieser Bauform ermöglicht das Stützjoch lediglich eine Abstützung und Fixierung der Extruderschnecken gegeneinander. Diese Ausführung des Stützjoches ist beispielsweise dann sinnvoll einsetzbar, wenn ein Aufsetzen der Schneckenstege 9 auf die Gehäuseinnenwandung nicht zu befürchten ist, aufgrund unterschiedlicher Schneckenbelastungen aber mit Abweichungen der Schneckenachsen zueinander gerechnet werden muß.

Unabhängig von der Stützfunktion des Stützjochs beim Betrieb eines Extruders erweist sich sein Einbau vor allem beim Ein- oder Herausziehen der Extruderschnecken als vorteilhaft. So kann das Stützjoch schon vor dem Einbau der Schnecken durch die Verbindung von zwei Stützjochhälften auf den Schneckenschäften befestigt und mit diesen in das Extrudergehäuse eingezogen werden. Dabei sorgt das Stützjoch für eine Fixierung der Schnek-kenachsen zueinander und dient als Abstandshalter zur Innenwand der Gehäusebohrungen. Auf diese Weise läßt sich ein leichter, schneller und die Schneckenstege schonender Schneckenwechsel durchführen.

**Bezugszeichenliste:**

| | | |
|---|---|---|
| 1 | = | Gehäuse |
| 2 | = | Extruderschnecke |
| 2a | = | Schneckenhülse |
| 3 | = | Extruderschnecke |
| 3a | = | Schneckenhülse |
| 4 | = | Stützjoch |

5 = Schneckenschaft
6 = Schneckenschaft
7 = Verschleißring
8 = Verschleißring
9 = Schneckensteg
10 = Spiel
11 = Stützstrebe
12 = Bohrung

## Patentansprüche

1. Zweischneckenextruder zur Verarbeitung von thermoplastischen Kunststoffen oder Elastomeren, bestehend aus einem Extrudergehäuse mit zwei einander überschneidenden, zylindrischen Gehäusebohrungen, einem Antrieb und zwei unterbrochene Schneckenstege aufweisenden Extruderschnecken, die antriebsseitig um ihre Längsachse drehbar im Extrudergehäuse gelagert sind,

   **dadurch gekennzeichnet,**

   daß die der Extruderschnecken (2, 3) über wenigstens ein gemeinsames, brillenförmiges Stützjoch (4) form- und/oder kraftschlüssig untereinander verbunden sind, und daß das Stützjoch (4) über Streben (11) gegen die Gehäuseinnenwand des Extruders abgestützt ist.

2. Zweischneckenextruder gemäß Anspruch 1,

   **dadurch gekennzeichnet,**

   daß das Stützjoch (4) an wenigstens zwei Stellen je Gehäusebohrung über die Streben (11) an dem Extrudergehäuse (1) abgestützt ist, und daß die Streben (11) zueinander einen Winkel von vorzugsweise 40 - 85° bilden.

3. Zweischneckenextruder gemäß Anspruch 2,

   **dadurch gekennzeichnet,**

   daß die Streben (11) auf der Extrudergehäuseinnenwand spielfrei aufliegen.

4. Zweischneckenextruder gemäß den Ansprüchen 1 und 2,

   **dadurch gekennzeichnet,**

   daß das Stützjoch (4) entlang einer die Drehachsen der Extruderschnecken (2, 3) verbindenden Geraden zweigeteilt und über Verbindungselemente miteinander verbindbar sind.

5. Zweischneckenextruder gemäß den Ansprüchen 1 bis 4,

   **dadurch gekennzeichnet,**

   daß der Teildurchmesser D des Stützjochs (4) kleiner als der Schneckendurchmesser d ist.

6. Zweischneckenextruder gemäß den Ansprüchen 1 bis 5,

   **dadurch gekennzeichnet,**

   daß Schneckenhülsen (2a, 3a) der Extruderschnecken (2, 3) im Bereich des Stützjochs (4) im Durchmesser verringert oder unterbrochen sind.

7. Zweichschneckenextruder gemäß den Ansprüchen 1 bis 6,

   **dadurch gekennzeichnet,**

   daß jeweils ein Verschleißring (7, 8) zwischen den Extruderschnecken (2, 3) und dem Stützjoch (4) angeordnet und mit letzteren auswechselbar verbunden ist.

8. Zweischneckenextruder gemäß den Ansprüchen 1 bis 7,

   **dadurch gekennzeichnet,**

   daß die Schneckenstege (9) im Bereich des Stützjochs (4) unterbrochen sind.

9. Zweischneckenextruder gemäß den Ansprüchen 1 sowie 4 bis 8,

   **dadurch gekennzeichnet,**

   daß das Stützjoch (4) über keine Stützstreben verfügt und nur der Positionierung der Extruderschnecken (2, 3) untereinander dient.

Fig.1

Fig.2

Fig.3